# EUROPEAN PATENT APPLICATION

(11) **EP 2 875 979 A1**
(43) Date of publication of application: **27.05.2015**
(21) Application number: 14191225.3
(22) Date of filing: 31.10.2014
(51) Int. Cl.: B60K 11/04

(54) **Front-end module of a vehicle**

(30) Priority: 20.11.2013 DE 102013112825
(71) Applicant: Valeo Klimasysteme GmbH, 96476 Bad Rodach (DE)
(72) Inventor: Niemann, Frank, 96476 Bad Rodach (DE); Lilge, Hans-Joachim, 96479 Weitramsdorf (DE); Adam, Frank, 98646 Stressenhausen (DE)
(74) Representative: Pellegrini, Marie Claude

(57) **Abstract**

The invention relates to a front-end module (12) of a vehicle (10), including a vehicle front-end element (20) which has at least one fresh air opening (22), an air channel (24) which connects the fresh air opening (22) with an engine compartment (14) of the vehicle (10), a heat exchanger (26) of a vehicle air-conditioning system, the heat exchanger (26) being arranged in the air channel (24) and being adapted for air to flow through it and being adapted to be selectively employed as a refrigerant condenser or a refrigerant evaporator, and a fan (28) arranged in the air channel (24) for acting upon the heat exchanger (26) with air, the fan (28) being configured to be reversible and, in a first operating mode, delivering fresh air (30) from the fresh air opening (22) toward the engine compartment (14) and, in a second operating mode, delivering air (32) from the engine compartment (14) toward the fresh air opening (22).

## Description

The invention relates to a front-end module of a vehicle, comprising a vehicle front-end element which has at least one fresh air opening, an air channel which connects the fresh air opening with an engine compartment of the vehicle, a heat exchanger of a vehicle air-conditioning system, the heat exchanger being arranged in the air channel and being adapted for air to flow through it and being adapted to be selectively employed as a refrigerant condenser or a refrigerant evaporator, and a fan arranged in the air channel for acting upon the heat exchanger with air.

Front-end modules of this type are already known from the prior art, for example from WO 2004/009427 A1 or KR 2012-0109098 A. Said conventional front-end modules are designed in particular for using fresh air from the vehicle surroundings as efficiently as possible as a low-temperature reservoir, for example for cooling an internal combustion engine, a vehicle interior, a vehicle battery and/or charge air supplied to the internal combustion engine. The flow of fresh air through corresponding heat exchangers is achieved or at least assisted here while underway by a dynamic pressure arising at the front of the vehicle. However, the front-end module additionally has a fan which ensures a sufficient flow of fresh air through the heat exchangers in particular even at low vehicle speeds.

In order to cool the vehicle interior, an air-conditioning system is customarily provided, whereas, in order to heat the vehicle interior, in the case of vehicles driven exclusively by an internal combustion engine, use is customarily made of the waste heat from the internal combustion engine. However, in the case of hybrid or electric vehicles, there is considerably less waste heat from the driving motor, and therefore said waste heat is insufficient for satisfactory heating of the vehicle interior.

An alternative electrical heating of the vehicle interior has proven highly energy-intensive and has an undesirably severe effect on the overall energy requirement of the vehicle.

For the energy-efficient heating of the vehicle interior of hybrid or electric vehicles, it has therefore already been proposed to design the air-conditioning circuit of a conventional vehicle air-conditioning system to be reversible such that the air-conditioning system can also be used as a heat pump for heating the vehicle interior.

The heat exchanger in the front-end module of the vehicle, which heat exchanger is used as a refrigerant condenser for the cooling of the vehicle interior, serves as a refrigerant evaporator in the heat pump mode and, in the process, extracts heat energy for heating the vehicle interior from the fresh air.

However, in particular in the case of wet and cold weather, the heat pump mode of the vehicle air-conditioning system rapidly results in undesirable icing of the heat exchanger acting as a refrigerant condenser, as a result of which the heating performance of the heat pump drops. With regard thereto, vehicle air-conditioning systems which have an operating mode for deicing the heat exchanger in the front-end module have already been developed. However, as a result of the continuous inflow of fresh air, effective deicing of the heat exchanger is a problem in the case of unfavourable, wet and cold weather conditions. In addition, the heating performance of the vehicle air-conditioning system is considerably impaired during the deicing of the heat exchanger.

It is therefore the object of the invention to provide a vehicle front-end module which contributes in a simple manner to a particularly efficient heat-pump mode of the vehicle air-conditioning system.

According to the invention, the object is achieved by a front-end module of the type mentioned at the beginning, in which the fan is configured to be reversible, the fan, in a first operating mode, delivering fresh air from the fresh air opening toward the engine compartment and, in a second operating mode, delivering air from the engine compartment toward the fresh air opening. In particular in the event of wet and cold weather, the fan can consequently charge the heat exchanger, in the heat-pump mode of the vehicle air-conditioning system, with air from the engine compartment, the air being hotter and dryer than the fresh air. Icing of the heat exchanger is thereby opposed in a simple manner.

In one embodiment of the front-end module, for controlling the airflow in the air channel, at least one fresh air flap is provided which is adjustable between an open position and a closure position. In the second operating mode of the fan, said at least one fresh air flap makes it possible to prevent or at least greatly reduce an undesirable inflow of fresh air, which is directed counter to the direction of flow of the fan, to the heat exchanger while underway. The dynamic pressure produced by the inflow of fresh air is consequently minimal, and therefore, at a maintainable fan power, an adequate amount of air flows through the heat exchanger from the engine compartment toward the fresh air opening.

The at least one fresh air flap is preferably integrated in the vehicle front-end element, the fresh air opening being substantially exposed in the open position of the at least one fresh air flap and being substantially closed in the closure position of the at least one fresh air flap. The air flow in the air channel can thereby be advantageously controlled aerodynamically with little technical outlay, wherein the fresh air flaps are designed, for example, as pivotable radiator grille slats of the vehicle.

The fan of the front-end module is preferably an axial fan since the latter, compared with alternative fans, is very compact in relation to the delivered air mass flow and therefore takes up little construction space in the front-end module.

In particular, the fan can include a plurality of fan blades rotating about a fan axis, the fan blades being shaped such that a delivery rate of the fan in the first operating mode is at least as high as a delivery rate of the fan in the second operating mode. Since the fan predominantly operates in the first operating mode, the front-end module can thereby be operated in a particularly energy-efficient manner.

The heat exchanger is preferably arranged between the fresh air opening of the vehicle front-end element and the fan, and therefore, in the first operating mode, the fan sucks up fresh air through the heat exchanger and, in the second operating mode, pushes air from the engine compartment through the heat exchanger. As an alternative, it is, of course, also conceivable for the fan to be arranged between the heat exchanger and the fresh air opening. Furthermore, further heat exchangers in the air channel can be arranged on the suction side or delivery side with respect to the fan, for example for cooling the engine, battery or charge air, wherein both a parallel connection and a series connection of the individual heat exchangers is conceivable.

In a further embodiment of the front-end module, the air channel includes an exhaust air opening via which air delivered in the second operating mode of the fan can be released to the vehicle environment after flowing through the heat exchanger. In the second operating mode of the fan, the exhaust air opening prevents an undesirably high dynamic pressure downstream of the heat exchanger and ensures a substantially constant flow resistance in the air channel. This results in a uniform flow of air through the heat exchanger and therefore in a substantially constant heating power of the vehicle air-conditioning system in the heat pump mode.

For controlling the air flow through the exhaust air opening, an exhaust air flap is preferably provided which is adjustable between an open position and a closure position. The exhaust air flap here is in particular spring-loaded into the closure position thereof in order, for example, to prevent an undesirable penetration of spray water into the air channel.

In a further embodiment of the front-end module, the air channel includes a recirculating air opening via which air delivered in the second operating mode of the fan can flow back into the engine compartment after flowing through the heat exchanger. In the second operating mode of the fan, the recirculating air opening prevents an undesirably high dynamic pressure downstream of the heat exchanger and ensures a substantially constant flow resistance in the air channel. This results in a uniform flow of air through the heat exchanger and therefore in a substantially constant heating power of the vehicle air-conditioning system in the heat pump mode.

In this embodiment, for controlling the air flow through the recirculating air opening, a recirculating air flap is preferably provided which is adjustable between an open position and a closure position. The recirculating air flap here is spring-loaded in particular into the closure position thereof in order, for example, in the first operating mode of the fan, to prevent undesirable suction of hot air out of the engine compartment.

The invention furthermore also relates to a vehicle, in particular a hybrid or electric vehicle, comprising an engine compartment, an above-described front-end module which is arranged in the engine compartment of the vehicle at a vehicle front end viewed in the direction of travel.

Further features and advantages of the invention emerge from the description below of preferred embodiments with reference to the drawings, in which:
- Figure 1 shows a schematic section through a front-end module according to the invention of a vehicle, in a first operating mode;
- Figure 2 shows a schematic section through the front-end module according to Figure 1 in a second operating mode; and
- Figure 3 shows a schematic section through a further embodiment of the front-end module according to the invention in the second operating mode.

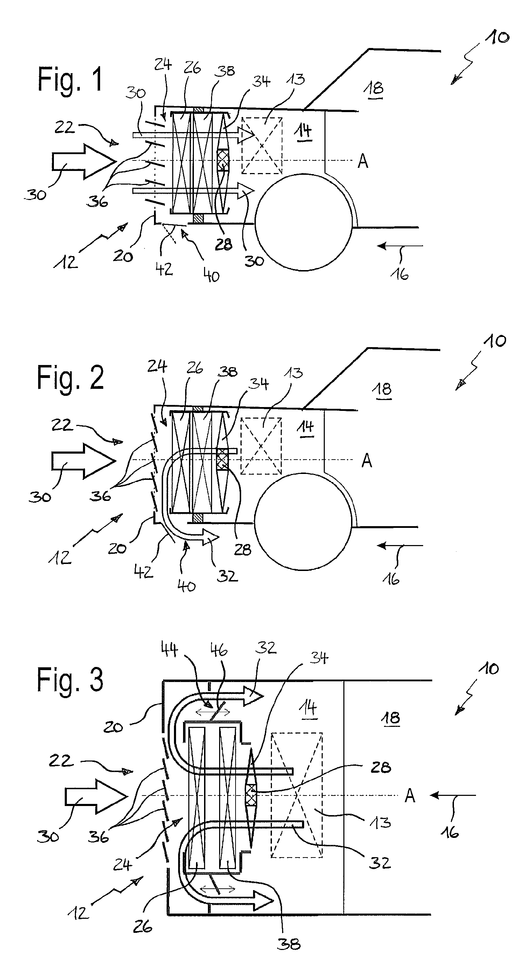

Figures 1 to 3 each show a schematic cutout of a vehicle 10, in particular a hybrid or electric vehicle, in the region of a front-end module 12. The front-end module 12 is accommodated precisely like a driving motor 13 (indicated by dashed lines) in an engine compartment 14 of the vehicle 10, wherein the front-end module 12 is arranged in the engine compartment 14 at a vehicle front end viewed in the direction of travel 16.

The front-end module 12 of the vehicle 10 comprises a vehicle front-end element 20 which has at least one fresh air opening 22, an air channel 24 which connects the fresh air opening 22 with the engine compartment 14 of the vehicle 10, a heat exchanger 26 of a vehicle air-conditioning system, the heat exchanger being arranged in the air channel 24 and being adapted for air to flow through it and being adapted to be selectively employed as a refrigerant condenser or a refrigerant evaporator, and a fan 28 arranged in the air channel 24 for acting upon the heat exchanger 26 with air.

The vehicle air-conditioning system is a conventional air-conditioning system for cooling a vehicle interior 18, but the air-conditioning system can additionally also be operated as a heat pump for heating the vehicle interior 18. Such vehicle air-conditioning systems with a reversible refrigerant circuit are already generally known from the prior art, and therefore this is not discussed in more detail below. Figures 1 to 3 merely illustrate the heat exchanger 26 of the vehicle air-conditioning system, said heat exchanger serving as a refrigerant condenser in the cooling mode of the air-conditioning system and as a refrigerant evaporator in the heating mode of the air-conditioning system.

According to Figures 1 to 3, the fan 28 of the front-end module 12 is an axial fan since the latter has comparatively small dimensions in relation to the delivered air mass flow and, accordingly, takes up relatively little construction space in the front-end module 12 of the vehicle 10.

Furthermore, the fan 28 is configured to be reversible, i.e. can deliver air in opposite directions by a reversal of the direction of rotation.

The fan 28, in a first operating mode of the front-end module 10 according to Figure 1, thus delivers fresh air 30 from the fresh air opening 22 toward the engine compartment 14 and, in a second operating mode of the front-end module 10 according to Figure 2, delivers air 32 from the engine compartment 14 toward the fresh-air opening 22.

The fan 28 includes in particular a plurality of fan blades 34 rotating about a fan axis A, the fan blades 34 being shaped such that a delivery rate of the fan 28 in the first operating mode is at least as high as a delivery rate of the fan 28 in the second operating mode. Fan blades 34 shaped in such a manner make an overall contribution to a particularly energy-efficient operation of the front-end module 12, since the fan 28 of the front-end module 12 generally predominantly operates in the first operating mode.

If the vehicle air-conditioning system is operated in the cooling mode for cooling the vehicle interior 18, the fan 28 is always in the first operating mode. Even in the heat-pump mode of the vehicle air-conditioning system, the fan 28, under some circumstances, remains in its first operating mode and is switched into its second operating mode only if wet and cold weather conditions are determined, for example via a vehicle sensor arrangement, which conditions would lead in the first operating mode of the fan 28 to icing of the heat exchanger 26. Alternatively, however, it is also conceivable for the fan 28 always to be operated in the first operating mode in the cooling mode of the vehicle air-conditioning system and always to be operated in the second operating mode in the heating mode of the vehicle air-conditioning system.

For controlling the air flow in the air channel 24, at least one fresh air flap 36 is provided which is adjustable between an open position and a closure position. In the present case, a plurality of fresh air flaps 36 are provided integrated in the vehicle front-end element 20, the fresh air opening 22 being substantially exposed in the open position of the fresh air flaps 36 according to Figure 1 and being substantially closed in the closure position of the fresh air flaps 36 according to Figure 2. Specifically, the vehicle front-end element 20 can be designed as a radiator grille and the fresh air flaps 36 can be designed as pivotable slats of the radiator grille.

In the first operating mode of the fan 28, the fresh air flaps 36 are in their open position (see Figure 1), and therefore fresh air 30 flows into the heat exchanger 26 while underway and flows through the latter toward the engine compartment 14. This flow of air through the heat exchanger 26 from the fresh air opening 22 toward the engine compartment 14 is assisted in the first operating mode by the air delivery direction of the fan 28.

While, at high vehicle speeds, the flow of air through the heat exchanger 26 is substantially determined by the inflow of fresh air and the fan 28 does not have a great influence, the flow of air through the heat exchanger 26 at low vehicle speeds is decisively determined by the fan 28 while the inflow of fresh air is negligible.

In the heat-pump mode of the vehicle air-conditioning system in the event of wet and cold weather, the fresh air flaps 36 are in their closure position (see Figure 2), and the fan 28 operates in its second operating mode.

Since the fresh air opening 22 is substantially closed in the second operating mode of the fan 28, there is scarcely any inflow of fresh air to the heat exchanger 26, which inflow would oppose the air delivery direction of the fan 28 in its second operating mode, even at high vehicle speeds.

In its second operating mode, the fan 28 delivers air 32 from the engine compartment 14 through the heat exchanger 26 in the direction of the fresh air opening 22. It is therefore not the fresh air 30 which flows through the heat exchanger 26, but rather the air 32 from the engine compartment 14, which air is hotter and drier in comparison to the fresh air 30. The risk of the heat exchanger 26 icing is therefore considerably reduced. In addition, the closed fresh air flaps 36 of the vehicle front-end element 20 prevent the penetration of spray water into the air channel 24, as a result of which the risk of the heat exchanger 26 icing is further reduced.

In the exemplary embodiment according to Figures 1 and 2, the heat exchanger 26 is arranged between the fresh air opening 22 of the vehicle front-end element 20 and the fan 28. Alternatively, however, it is also conceivable for the fan 28 to be arranged between the heat exchanger 26 and the fresh air opening 22.

Furthermore, yet another heat exchanger 38 is provided in the air channel 24 between the heat exchanger 26 of the vehicle air-conditioning system and the fan 28, for example for cooling the engine, cooling the battery or cooling the charge air. Instead of the illustrated series connection of the heat exchangers 26, 38, a parallel connection and the arrangement of further heat exchangers in a series or parallel connection are, of course, also conceivable.

In the embodiment of the front-end module 12 according to Figures 1 and 2, the air channel 24 includes an exhaust air opening 40, wherein air 32 delivered in the second operating mode of the fan 28 can be released to the vehicle environment via the exhaust air opening 40 after flowing through the heat exchanger 26 (see Figure 2).

For controlling the air flow through the exhaust air opening 40, an exhaust air flap 42 is provided in the present case which is adjustable between an open position according to Figure 2 and a closure position according to Figure 1. The exhaust air flap 42 is preferably spring-loaded into its closure position, and therefore, when an air flow fails to materialize through the exhaust air opening 40, spray water does not penetrate into the air channel 24.

In the second operating mode of the fan 28, the exhaust air flap 42 is opened when a predetermined dynamic pressure is reached in the air channel 24, and the exhaust air opening 40 is released such that the air 32 can flow away. This prevents the dynamic pressure in the air channel 24 from raising excessively when the fresh air flaps 36 have closed and from having an adverse effect on a flow of air through the heat exchanger 26.

Figure 3 shows a schematic horizontal section of the front-end module 12 according to a further embodiment in the second operating mode of the fan 28.

This embodiment of the front-end module 12 according to Figure 3 differs from the embodiment according to Figures 1 and 2 merely in that the air channel 24 includes recirculating air openings 44 instead of the exhaust air opening 40, wherein air 32 delivered in the second operating mode of the fan 28 can flow back into the engine compartment 14 via the recirculating air openings 44 after flowing through the heat exchanger 26.

For controlling the air flow through the recirculating air openings 44, recirculating air flaps 46 are provided in the present case which are adjustable between an open position according to Figure 3 and a closure position. In a similar manner to the exhaust air flap 42 according to Figures 1 and 2, the recirculating air flaps 46 are preferably also spring-loaded into their closure position. This prevents air 32 being undesirably sucked out of the engine compartment 14 via the recirculating air openings 44 in the first operating mode of the fan 28.

The front-end module 12 illustrated is suitable in particular for use in hybrid or electric vehicles, since, in the case of these vehicles 10, the waste heat from the driving motor 13 is generally not sufficient for satisfactory heating of the vehicle interior 18. However, the waste heat from the driving motor 13 and/or the driving batteries of the vehicle 10 suffices in order to heat, and optionally to dry, the air 32 in the engine compartment 14 in relation to the fresh air 30 at low external temperatures.

In the second operating mode of the fan 28 and in the heat-pump mode of the vehicle air-conditioning system, the air 32 then flows through the heat exchanger 26, which acts as a refrigerant evaporator, and, in the process, outputs heat energy for heating the vehicle interior 18.

By means of the higher temperature of the air 32 in the engine compartment 14 in comparison to the fresh air 30, the risk of icing of the heat exchanger 26 is significantly reduced. Furthermore, because of the closed fresh air opening 22, the heat exchanger 26 is not acted upon while underway in the second operating mode of the fan 28 by cold and possibly moist fresh air 30, and this further reduces the risk of icing of the heat exchanger 26.

However, the air 32 in the engine compartment 14 is only slightly heated by the waste heat from the driving motor 13 and/or the driving batteries of the vehicle 10 and, as before, is cold enough in order to continue to be used, for example in the heat exchanger 38, for cooling the engine, cooling the charge air or the like.

## Claims

1. A front-end module of a vehicle (10), comprising
a vehicle front-end element (20) which has at least one fresh air opening (22),
an air channel (24) which connects the fresh air opening (22) with an engine compartment (14) of the vehicle (10),
a heat exchanger (26) of a vehicle air-conditioning system, the heat exchanger (26) being arranged in the air channel (24) and being adapted for air to flow through it and being adapted to be selectively employed as a refrigerant condenser or a refrigerant evaporator, and
a fan (28) arranged in the air channel (24) for acting upon the heat exchanger (26) with air,
**characterized in that** the fan (28) is configured to be reversible, the fan (28), in a first operating mode, delivering fresh air (30) from the fresh air opening (22) toward the engine compartment (14) and, in a second operating mode, delivering air (32) from the engine compartment (14) toward the fresh air opening (22).

2. The front-end module according to claim 1, **characterized in that** for controlling the air flow in the air channel (24), at least one fresh air flap (36) is provided which is adjustable between an open position and a closure position.

3. The front-end module according to claim 2, **characterized in that** the at least one fresh air flap (36) is integrated in the vehicle front-end element (20), the fresh air opening (22) being substantially exposed in the open position of the at least one fresh air flap (36) and being substantially closed in the closure position of the at least one fresh air flap (36).

4. The front-end module according to any of the preceding claims, **characterized in that** the fan (28) is an axial fan.

5. The front-end module according to any of the preceding claims, **characterized in that** the fan (28) includes a plurality of fan blades (34) rotating about a fan axis (A), the fan blades (34) being shaped such that a delivery rate of the fan (28) in the first operating mode is at least as high as a delivery rate of the fan (28) in the second operating mode.

6. The front-end module according to any of the preceding claims, **characterized in that** the heat exchanger (26) is arranged between the fresh air opening (22) of the vehicle front-end element (20) and the fan (28).

7. The front-end module according to any of the preceding claims, **characterized in that** the air channel (24) includes an exhaust air opening (40), wherein air (32) delivered in the second operating mode of the fan (28) can be released to the vehicle environment via the exhaust air opening (40) after flowing through the heat exchanger (26).

8. The front-end module according to claim 7, **characterized in that** for controlling the air flow through the exhaust air opening (40), an exhaust air flap (42) is provided which is adjustable between an open position and a closure position.

9. The front-end module according to any of the preceding claims, **characterized in that** the air channel (24) includes a recirculating air opening (44), wherein air (32) delivered in the second operating mode of the fan (28) can flow back into the engine compartment (14) via the recirculating air opening (44) after flowing through the heat exchanger (26).

10. The front-end module according to claim 9, **characterized in that** for controlling the air flow through the recirculating air opening (44), a recirculating air flap (46) is provided which is adjustable between an open position and a closure position.

11. A vehicle, in particular a hybrid or electric vehicle, comprising
an engine compartment (14), and
a front-end module (12) according to any of the preceding claims,
wherein the front-end module (12) is arranged in the engine compartment (14) of the vehicle (10) at a vehicle front end viewed in the direction of travel (16).
